Europäisches Patentamt

European Patent Office

Office européen des brevets

(19)

(11) Veröffentlichungsnummer : **0 128 512 B1**

(12) **EUROPÄISCHE PATENTSCHRIFT**

(45) Veröffentlichungstag der Patentschrift :
08.07.87

(21) Anmeldenummer : 84106426.4

(22) Anmeldetag : 05.06.84

(51) Int. Cl.⁴ : **B 23 Q   3/155**, B 23 B 29/20

(54) Werkzeughalter für Werkzeugmaschinen.

(30) Priorität : 08.06.83 DE 3320693

(43) Veröffentlichungstag der Anmeldung :
19.12.84 Patentblatt 84/51

(45) Bekanntmachung des Hinweises auf die Patenterteilung : 08.07.87 Patentblatt 87/28

(84) Benannte Vertragsstaaten :
AT BE CH DE FR GB IT LI NL SE

(56) Entgegenhaltungen :
FR-A- 2 486 848
WERKSTATTSTECHNIK - ZEITSCHRIFT FÜR INDUSTRIELLE FERTIGUNG, Band 73, Nr. 4, April 1983, Seiten 207-210, Springer Verlag, Würzburg, DE; R. BALLACH: "Die keramikgerechte Drehmaschine"
WERKSTATT UND BETRIEB, Band 115, Nr. 2, Februar 1982, Seiten 111-115, München, DE; H.-D. SCHUBERT: "Universell einsetzbares Werkzeugsystem für Bearbeitunszentren"

(73) Patentinhaber : TRAUB Aktiengesellschaft
Ulmer Strasse 49-55
D-7313 Reichenbach/Fils (DE)

(72) Erfinder : Sonnek, Werner
Brunnenwiesenweg 33
D-7061 Lichtenwald 2 (DE)

(74) Vertreter : Wuesthoff, Franz, Dr.-Ing. et al
Patentanwälte Wuesthoff -v. Pechmann-Behrens-Goetz Schweigerstrasse 2
D-8000 München 90 (DE)

## Beschreibung

Die Erfindung betrifft einen Werkzeughalter für Werkzeugmaschinen, denen eine Einrichtung mit wenigstens einem Greifer für den automatischen Wechsel von Werkzeughaltern zugeordnet ist, mit

einem Halterkopf, der an mindestens einer Seite Befestigungsmittel für ein Werkzeug und an einer weiteren Seite eine ebene Anlagefläche aufweist,

und einem Halterschaft, der sich im rechten Winkel zur Anlagefläche von dieser weg erstreckt und in einer Aufnahmebohrung eines Werkzeugträgers einspannbar ist.

Werkzeughalter dieser Gattung, die vor allem für numerisch gesteuerte Drehmaschinen verwendet werden, sind in der VDI-Richtlinie 3425 (VDI-Verlag GmbH, Düsseldorf 1972) beschrieben. Am Halterkopf solcher Werkzeughalter können zum Halterschaft parallele Angriffsflächen für einen Greifer ausgebildet sein. Für unterschiedliche Werkzeuge, beispielsweise Außenbearbeitungswerkzeuge in Form von Drehstählen und Innenbearbeitungswerkzeuge in Form von Bohrern od. dgl. sind im allgemeinen Werkzeughalter erforderlich, die sich in Form und Abmessungen ihres Halterkopfes erheblich voneinander unterscheiden. Es ist in vielen Fällen nicht möglich, solch unterschiedliche Halterköpfe mit gleichgestalteten und in gleichen Abständen von der Achse des zugehörigen Halterschafts angeordneten Angriffsflächen zu versehen, die es ermöglichen, die verschiedenen Werkzeughalter mit einer einfach gestalteten Wechseleinrichtung automatisch zu erfassen und zu wechseln. Wenn es aber gelingt, sämtliche zum Einsatz an einer und derselben Werkzeugmaschine vorgesehenen Werkzeughalter mit einheitlichen Angriffsflächen zu versehen, haben diese einen erheblichen Abstand voneinander, da sie außen an den Halterköpfen angeordnet sind ; infolgedessen erfordern sie einen Greifer mit entsprechend großer Öffnungsweite.

Der Erfindung liegt deshalb die Aufgabe zugrunde, Werkzeughalter der eingangs beschriebenen Gattung derart weiterzubilden, daß sie sich selbst bei stark unterschiedlicher Gestaltung ihrer Halterköpfe mit einem einfachen und nicht allzu großen Greifer sicher und genau erfassen und transportieren lassen.

Diese Aufgabe ist, ausgehend von dem beschriebenen bekannten Werkzeughalter, erfindungsgemäß dadurch gelöst, daß neben der Anlagefläche rings um den Halterschaft eine Greifplatte angeordnet ist, die an gegenüberliegenden Seiten des Halterschafts mindestens je eine Greiffläche aufweist.

Durch die Erfindung wird die Gestaltung und Anordnung der Greifflächen einschließlich ihrer Abstände voneinander von der äußeren Form des zugehörigen Halterkopfes unabhängig ; infolgedessen läßt sich eine beliebige Zahl von Werkzeughaltern, deren Halterköpfe sich in ihrer Außenform erheblich voneinander unterscheiden können, mit vollständig gleichen, nicht übermäßig weit voneinander entfernten Greifflächen ausstatten und dementsprechend mit einem Greifer von nur mäßiger Größe erfassen.

Die Greifplatte kann mit dem Halterkopf und/oder dem Halterschaft in einem Stück hergestellt sein. Bei einer bevorzugten Ausführungsform der Erfindung ist die Greifplatte jedoch als gesondertes Bauteil ausgebildet, auf den Halterschaft aufgesteckt und an der Anlagefläche anliegend am Halterkopf befestigt. Solche Greifplatten lassen sich mit geringen Kosten herstellen und auch noch nachträglich an schon benutzten Werkzeughaltern befestigen.

Die Greifplatte ist vorzugsweise so ausgebildet, daß sie sich in mindestens zwei verschiedenen Winkelstellungen am Halterkopf befestigen läßt. Dadurch wird die Möglichkeit geschaffen, Werkzeughalter, die an einem Werkzeugträger in unterschiedlicher Weise angeordnet sind, derart mit je einer Greifplatte auszustatten, daß ein Greifer zum Erfassen und Freigeben dieser verschiedenen Werkzeughalter stets im wesentlichen gleiche Bewegungen im Raum auszuführen hat. Die erfindungsgemäßen Greifplatten tragen dann dazu bei, die Gestaltung und Steuerung der Einrichtung zum automatischen Wechseln der Werkzeughalter zu vereinfachen.

Das letztgenannte Merkmal läßt sich besonders einfach dadurch verwirklichen, daß die Greifplatte vier Befestigungslöcher aufweist, die um je 90° gegeneinander versetzt rings um den Halterschaft angeordnet sind.

Es ist ferner vorteilhaft, wenn die Greifplatte an einer Seite des Halterschafts eine erste und eine zweite Greiffläche aufweist, die gegeneinander geneigt sind, und die Greifplatte an der gegenüberliegenden Seite des Halterschafts eine dritte Greiffläche aufweist, die gegen die erste und die zweite Greiffläche geneigt ist. Dadurch wird die Möglichkeit geschaffen, mit einem an diese Gestaltung der Greifflächen angepaßten Greifer die erfindungsgemäße Greifplatte derart zu erfassen, daß die geometrische Achse des zugehörigen Halterschafts bei jeder Stellung des Greifers eine genau definierte Lage im Raum hat.

Außerdem ist es vorteilhaft, wenn die Greifflächen zusammen mit der Anlagefläche des Halterkopfes je eine V-förmige Nut bilden. Damit wird erreicht, daß die Lage des Werkzeughalters und des ihn erfassenden Greifers in bezug zueinander auch in axialer Richtung des Halterschafts genau definiert ist.

Werkzeughalter der eingangs beschriebenen Gattung können an ihrem Halterschaft eine Verzahnung aufweisen, der ein komplementär verzahnter, im Werkzeugträger quer zum Halterschaft verschiebbarer Riegel zum Festspannen des Werkzeughalters zugeordnet ist. Bei dieser bekannten Gestaltung des Werkzeughalters ist erfindungsgemäß die Dicke der Greifplatte gleich der Zahnteilung der Verzahnung oder einem ganzzahligen Vielfachen davon. Damit wird erreicht, daß der Werkzeughalter wahlweise mit oder ohne erfindungsgemäße Greifplatte verwendet werden kann, oder mit anderen Worten, daß ein Werkzeugträger, der für das Zusammenwirken mit bekannten gattungsgemäßen Werkzeughaltern gestaltet worden ist, ohne jede Änderung des Riegels und seiner Anordnung innerhalb des Werkzeugträgers zum Festspannen von Werkzeughaltern mit erfindungsgemäßer Greifplatte verwendet werden kann.

Ausführungsbeispiele der Erfindung werden im folgenden anhand schematischer Zeichnungen mit weiteren Einzelheiten erläutert. Es zeigt :

Figur 1 Teile eines Drehautomaten mit erfindungsgemäßen Werkzeughaltern in Draufsicht,

Figur 2 den senkrechten Schnitt II-II in Fig. 1,

Figur 3 Teile eines anderen Drehautomaten mit erfindungsgemäßen Werkzeughaltern in Draufsicht,

Figur 4 einen der in Fig. 3 dargestellten Werkzeughalter in vergrößerter Schrägansicht,

Figur 5 eine teilweise als Längsschnitt dargestellte Seitenansicht des Werkzeughalters gemäß Fig. 4 in Einbaustellung,

Figur 6 die entsprechende Seitenansicht des Werkzeughalters alleine und

Figur 7 die Ansicht in Richtung des Pfeils VII in Fig. 6.

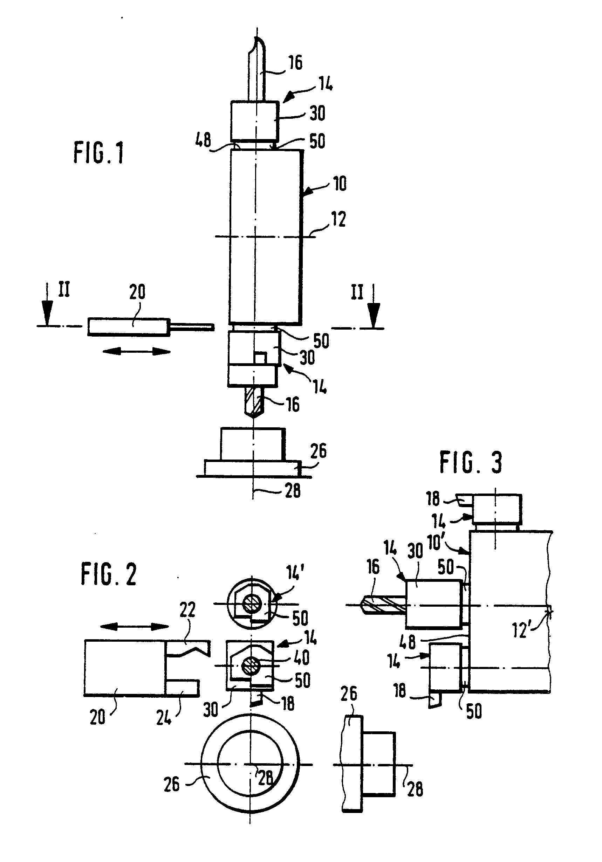

In Fig. 1 ist ein Werkzeugträger 10 dargestellt, der als Sternrevolver eines Drehautomaten ausgebildet und um eine waagerechte Achse 12 drehbar ist. Am Umfang des Werkzeugträgers 10 sind in gleichmäßigen Winkelabständen mehrere Werkzeughalter 14 befestigt, die mit Werkzeugen bestückt sind. Dargestellt sind zwei Innenbearbeitungswerkzeuge 16, nämlich eine Bohrstange und ein Spiralbohrer, die sich beide radial zur Achse 12 erstrecken. Weitere am Werkzeugträger 10 angeordnete Werkzeughalter 14, von denen einer in Fig. 2 erkennbar ist, können mit Außenbearbeitungswerkzeugen 18 bestückt sein, beispielsweise mit Drehmeißeln. Die Werkzeughalter 14 sind der Art der Werkzeuge 16 oder 18, die sie zu halten haben, angepaßt und weisen entsprechend unterschiedliche äußere Formen und Abmessungen auf ; so ist in Fig. 2 oberhalb des Werkzeughalters 14, der einen im wesentlichen quadratischen äußeren Umriß hat, ein Werkzeughalter 14' mit kreisförmigem Umriß dargestellt.

Als Variante zu dem in Fig. 1 dargestellten Werkzeugträger 10 zeigt Fig. 3 einen Werkzeugträger 10', der als Vierkant-Flachtischrevolver ausgebildet und um eine senkrechte Achse 12' drehbar ist. Die vier Seiten des Werkzeugträgers 10' sind mit je einem oder zwei Werkzeughaltern 14 besetzt, die mit je einem Innenbearbeitungswerkzeug 16 oder Außenbearbeitungswerkzeug 18 bestückt sind.

Zum Wechseln der Werkzeughalter 14 samt zugehörigen Werkzeugen 16 oder 18 ist dem Werkzeugträger 10 gemäß Fig. 1 und 2 mindestens ein Greifer 20 zugeordnet, der zwei gegeneinander bewegliche Finger 22 und 24 aufweist, nämlich einen Finger 22 mit abgewinkelter Innenkante und einen Finger 24 mit gerader Innenkante. Ein entsprechender Greifer ist auch dem Werkzeugträger 10' in Fig. 3 zugeordnet, dort aber nicht dargestellt. Der Greifer 20 ist gemäß Fig. 1 und 2 jeweils mit demjenigen Werkzeughalter 14 in Eingriff bringbar, der eine Arbeitsstellung gegenüber einem Spannfutter 26 einnimmt, das um eine Arbeitsspindelachse 28 drehbar ist. Alternativ kann der Greifer 20 jeweils denjenigen Werkzeughalter 14 auswechseln, der eine gegenüber dem Spannfutter 26 um einen Winkel von beispielsweise 90° versetzte Stellung einnimmt.

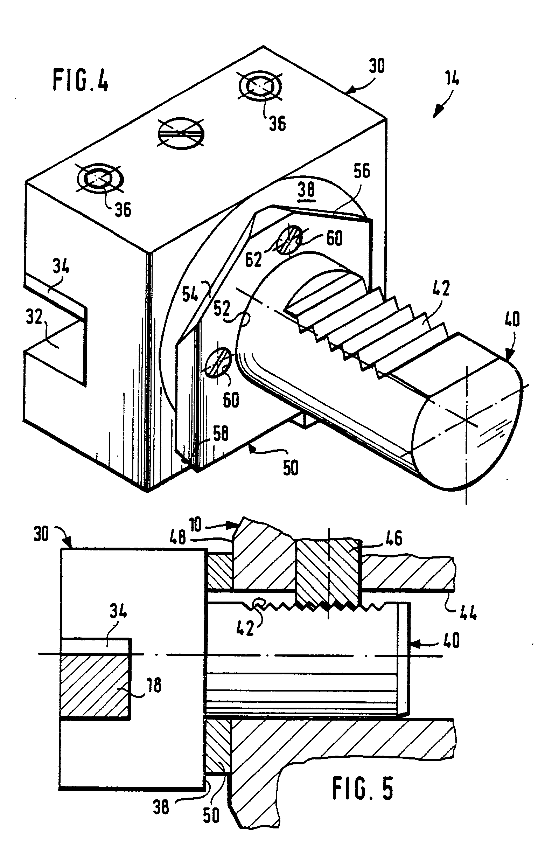

Jeder Werkzeughalter 14 hat einen Halterkopf 30 mit Befestigungsmitteln für ein Werkzeug 16 oder 18 ; gemäß Fig. 4 bis 7 bestehen die Befestigungsmittel aus einer Befestigungsnut 32, einer Klemmplatte 34 und einem Paar Klemmschrauben 36 zum Festspannen eines Außenbearbeitungswerkzeugs 18 in Gestalt eines Drehmeißels. An der von der Befestigungsnut 32 abgewandten Rückseite des Halterkopfes 30 ist eine ebene Anlagefläche 38 ausgebildet.

In der Mitte der Anlagefläche 38 und rechtwinklig zu ihr ragt vom Halterkopf 30 ein im wesentlichen zylindrischer Halterschaft 40 weg, der an seiner in Fig. 4 bis 7 oberen Seite abgeflacht ist und eine Verzahnung 42 aufweist. Der Halterschaft 40 paßt in eine Aufnahmebohrung 44 des Werkzeugträgers 10. Im Werkzeugträger 10 ist ein Riegel 46 quer zur Aufnahmebohrung 44 verschiebbar geführt. Die in bezug zur Aufnahmebohrung 44 innere Stirnfläche des Riegels 46 ist komplementär zur Verzahnung 42 verzahnt. Auf den Riegel 46 läßt sich mit einer nicht dargestellten Spannvorrichtung üblicher Bauart eine in bezug zur Aufnahmebohrung 44 radiale Kraft ausüben, die über die Verzahnung 42 in eine Axialkraft umgesetzt wird, welche den Halterschaft 40 in die Aufnahmebohrung 44 hineinzieht.

Werkzeughalter 14 mit den bisher beschriebenen Merkmalen sind bekannt ; sie werden im Betrieb vom Riegel 46 in einer Einspannstellung gehalten, in welcher die Anlagefläche 38 an einer zur Achse des Halterschafts 40 normalen Planfläche 48 anliegt. Gemäß Fig. 1 bis 7 ist jedoch zwischen der Anlagefläche 38 und der Planfläche 48 eine Greifplatte 50 angeordnet, die im folgenden näher beschrieben wird.

Die Greifplatte 50 ist eine verhältnismäßig dünne Platte aus hartem Stahl ; ihre Dicke d ist im dargestellten Beispiel doppelt so groß wie die Zahnteilung t der Verzahnung 42. Die Verzahnung 42 erstreckt sich über einen ausreichenden Teil der Länge des Halterschafts 40, so daß die zwischen Anlagefläche 38 und Planfläche 48 angeordnete Greifplatte 50 den Riegel 46 nicht daran hindern kann, mit der Verzahnung 42 in entsprechender Weise zusammenzuwirken, wie bei einem Werkzeughalter ohne Greifplatte 50.

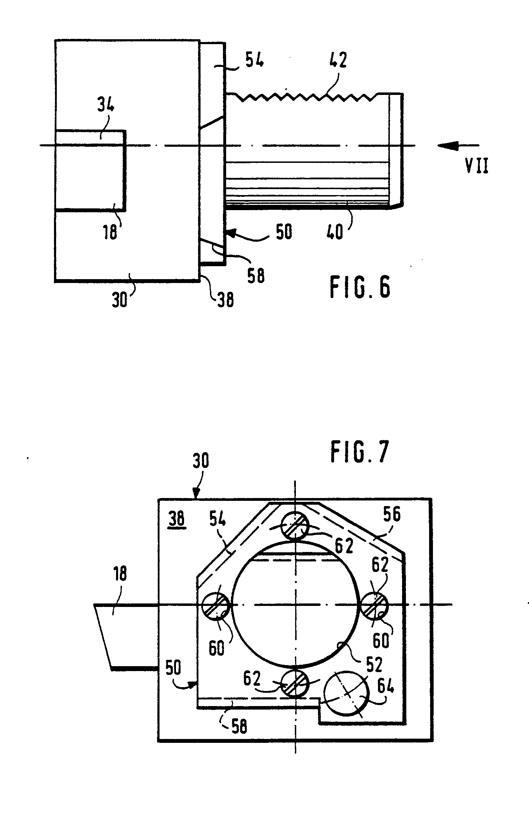

Die Greifplatte 50 hat eine zentrale Bohrung 52 und ist mit engem Sitz auf den Halterschaft 40 aufgeschoben, so daß sie in bezug zu diesem und dem gesamten Werkzeughalter 14 genau zentriert ist. An der in Fig. 4 bis 7 oberen Seite der Greifplatte 50 sind zwei Greifflächen 54 und 56 für den mit abgewinkelter Innenkante ausgebildeten Finger 22 des Greifers 20 angeordnet. Entsprechend der Abwinkelung der Innenkante des Fingers 22 ist die Greiffläche 54 gegen die in Fig. 7 waagerechte Mittelachse des Werkzeughalters 14 um 45° geneigt, während die Greiffläche 56 in Gegenrichtung um 30° geneigt ist. An der in Fig. 4 bis 7 unteren Seite der Greifplatte 50 ist eine dritte Greiffläche 58 ausgebildet, die sich parallel zu der in Fig. 7 waagerechten Mittelachse des Werkzeughalters 14 erstreckt ; diese dritte Greiffläche 58 ist dem mit einer geraden Innenkante versehenen Finger 24 des Greifers 20 zugeordnet.

Die Greifplatte 50 hat rings um ihre zentrale Bohrung 52 vier in Winkelabständen von je 90° gegeneinander versetzte Befestigungslöcher 60, die als Durchgangslöcher ausgebildet sind und je eine Senkschraube 62 aufnehmen. Der Halterkopf 30 hat in entsprechender Weise angeordnete, in den Zeichnungen nicht sichtbare Gewindebohrungen, in welche die Senkschrauben 62 eingeschraubt sind. Auf diese Weise ist die Greifplatte 50 genau zentrisch und starr am Werkzeughalter 14 befestigt ; sie läßt sich jedoch nach Losen der Senkschrauben 62 um einen Winkel von 90° oder einem Vielfachen davon drehen und erneut befestigen, wenn dies im Hinblick auf das Zusammenwirken mit dem Greifer 20 zweckmäßiger ist.

Jede der Greifflächen 54, 56 und 58 ist gegen die Längsachse des Halterschafts 40 derart geneigt, daß sie zusammen mit der Anlagefläche 38 eine Art Nut von V-förmigen Querschnitt bildet.

Gemäß Fig. 7 hat die Greifplatte 50 eine exzentrisch angeordnete Bohrung 64 die in üblicher Weise mit einem nicht dargestellten, am Werkzeughalter 14 befestigten Zentrierstift zusammenwirkt. Der Zentrierstift ist hohl ausgebildet und an eine Kühlmittelleitung angeschlossen, die über die Bohrung 64 mit Kühlmittelkanälen im Halterkopf 30 verbunden wird.

### Patentansprüche

1. Werkzeughalter (14) für Werkzeugmaschinen, denen eine Einrichtung mit wenigstens einem Greifer für den automatischen Wechsel von Werkzeughaltern zugeordnet ist, mit
einem Halterkopf (30), der an mindestens einer Seite Befestigungsmittel (32, 34, 36) für ein Werkzeug (16, 18) und an einer weiteren Seite eine ebene Anlagefläche (38) aufweist,
und einem Halterschaft (40), der sich im rechten Winkel zur Anlagefläche (38) von dieser weg erstreckt und in einer Aufnahmebohrung (44) eines Werkzeugträgers (10) einspannbar ist,
dadurch gekennzeichnet, daß neben der Anlagefläche (38) rings um den Halterschaft (40) eine Greifplatte (50) angeordnet ist, die an gegenüberliegenden Seiten des Halterschafts (40) mindestens je eine Greiffläche (54, 56, 58) aufweist.

2. Werkzeughalter nach Anspruch 1, dadurch gekennzeichnet, daß die Greifplatte (50) als gesondertes Bauteil ausgebildet, auf den Halterschaft (40) aufgesteckt und an der Anlagefläche (38) anliegend am Halterkopf (30) befestigt ist.

3. Werkzeughalter nach Anspruch 2, dadurch gekennzeichnet, daß die Greifplatte (50) sich in mindestens zwei verschiedenen Winkelstellungen am Halterkopf (30) befestigen läßt.

4. Werkzeughalter nach Anspruch 3, dadurch gekennzeichnet, daß die Greifplatte (50) vier Befestigungslöcher (60) aufweist, die um je 90° gegeneinander versetzt rings um den Halterschaft (40) angeordnet sind.

5. Werkzeughalter nach Anspruch 1, dadurch gekennzeichnet, daß die Greifplatte (50) an einer Seite des Halterschafts (40) eine erste und eine zweite Greiffläche (54, 56) aufweist, die gegeneinander geneigt sind, und die Greifplatte (50) an der gegenüberliegenden Seite des Halterschafts (40) eine dritte Greiffläche (58) aufweist, die gegen die erste und die zweite Greiffläche (54, 56) geneigt ist.

6. Werkzeughalter nach Anspruch 1, dadurch gekennzeichnet, daß die Greifflächen (54, 56, 58) zusammen mit der Anlagefläche (38) des Halterkopfes (30) je eine V-förmige Nut bilden.

7. Werkzeughalter nach Anspruch 1, dessen Halterschaft (40) eine Verzahnung (42) aufweist, der ein komplementär verzahnter, im Werkzeugträger (10) quer zum Halterschaft (40) verschiebbarer Riegel (46) zum Festspannen des Werkzeughalters (14) zugeordnet ist, dadurch gekennzeichnet, daß die Dicke (d) der Greifplatte (50) gleich der Zahnteilung (t) der Verzahnung (42) oder einem ganzzahligen Vielfachen davon ist.

### Claims

1. A tool holder (14) for machine tools to which is assigned a means having at least one gripper for automatically exchanging tool holders, comprising
a holder head (30) having fastening means (32, 34, 36) for a tool (16, 18) on at least one side of the holder head and a planar abutment surface (38) on a further side thereof,
and a holder shaft (40) extending at a right angle with respect to the abutment surface (38) away from the same and being adapted to be clamped in an accommodating bore (44) of a tool support (10),
characterised in that a gripper plate (50) is arranged adjacent the abutment surface (38) around the holder shaft (40) which gripper plate comprises at least one gripping surface (54, 56, 58) each on opposite sides of the holder shaft (40).

2. The tool holder as claimed in claim 1, characterized in that the gripper plate (50) is designed as a separate member, is fitted on the holder shaft (40), and is fastened to the holder head (30) while abutting against the abutment surface (38).

3. The tool holder as claimed in claim 2, characterized in that the gripper plate (50) is adapted to be fixed to the holder head (30) in at least two different angular positions.

4. The tool holder as claimed in claim 3, characterized in that the gripper plate (50) comprises four fastening holes (60) arranged around the holder shaft (40), each offset by 90° with respect to the other.

5. The tool holder as claimed in claim 1, characterized in that the gripper plate (50) comprises on one side of the holder shaft (40) first and second gripping surfaces (54, 56) which are inclined towards each other, and that the gripper plate (50) comprises on the opposite side of the holder shaft (40) a third gripping surface (58) which is inclined towards the first and the second gripping surfaces (54, 56).

6. The tool holder as claimed in claim 1, characterized in that each of the gripping surfaces (54, 56, 58) forms a V-shaped groove together with the abutment surface (38) of the holder head (30).

7. The tool holder as claimed in claim 1 whose holder shaft (40) comprises a toothing (42) to which is assigned a complementarily toothed bolt (46) slidable in the tool support (10) transversely with respect to the holder shaft (40) for clamping the tool holder (14), characterized in that the thickness (d) of the gripper plate (50) is equal to the pitch (t) of the toothing (42) or an integral multiple thereof.

## Revendications

1. Porte-outil (14) pour machines-outils, qui présentent un dispositif avec au moins une pince pour le changement automatique des porte-outils, comportant :
une tête de porte-outil (30) qui présente sur au moins une face des moyens de fixation (32, 34, 36) pour un outil (16, 18) et sur une autre face une surface d'appui plane (38),
et un fût de porte-outil (40) qui s'étend depuis la surface d'appui (38) à angle droit de cette surface et que l'on peut brider dans un alésage de réception (44) d'un support d'outil (10), caractérisé en ce qu'à côté de la surface d'appui (38), tout autour du fût de porte-outil (40), est disposée une plaque de prise (50) qui présente au moins une surface de prise (54, 56, 58) sur chacun des côtés, opposés l'un à l'autre, du fût du porte-outil (40).

2. Porte-outil selon la revendication 1, caractérisé en ce que la plaque de prise (50) a la forme d'un composant spécial, s'enfile sur le fût du porte-outil (40) et est fixé à la tête du porte-outil (30) contre la surface d'appui (38).

3. Porte-outil selon la revendication 2, caractérisé en ce que la plaque de prise (50) peut se fixer sur la tête du porte-outil (30) en au moins deux positions angulaires différentes.

4. Porte-outil selon la revendication 3, caractérisé en ce que la plaque de prise (50) présente quatre trous de fixation (60) qui sont disposés tout autour du fût du porte-outil (40), décalés de chaque fois 90° l'un par rapport à l'autre.

5. Porte-outil selon la revendication 1, caractérisé en ce que la plaque de prise (50) présente d'un côté du fût du porte-outil (40) une première surface de prise et une seconde surface de prise (54, 56) qui sont inclinées l'une par rapport à l'autre ; et en ce que la plaque de prise (50) présente, du côté opposé du fût du porte-outil (40), une troisième surface de prise (58) qui est inclinée par rapport à la première surface de prise et par rapport à la seconde surface de prise (54, 56).

6. Porte-outil selon la revendication 1, caractérisé en ce que les surfaces de prise (54, 56, 58) forment respectivement une rainure en forme de V avec la surface d'appui (38) de la tête du porte-outil (30).

7. Porte-outil selon la revendication 1, dont le fût du porte-outil (40) présente une denture (42) à laquelle correspond, pour bloquer le porte-outil (14), un verrou (46) à denture complémentaire et qui peut coulisser dans le support d'outils (10) transversalement par rapport au fût du porte-outil (40), caractérisé en ce que l'épaisseur (d) de la plaque de prise (50) est égale au pas (t) de la denture (42) ou en est un multiple entier.

FIG.1

FIG. 2

FIG. 3

FIG.4

FIG. 5

FIG. 6

FIG. 7